# EUROPEAN PATENT APPLICATION

(11) **EP 4 708 912 A1**
(43) Date of publication of application: **11.03.2026**
(21) Application number: 24879896.9
(22) Date of filing: 23.07.2024
(51) Int. Cl.: H04R 3/00, G06F 3/16, H04R 27/00, H04R 1/10

(54) **ELECTRONIC APPARATUS AND CONTROL METHOD THEREFOR**

(30) Priority: 17.10.2023 KR 20230138945
(71) Applicant: Samsung Electronics Co., Ltd., Suwon-si, Gyeonggi-do 16677 (KR)
(72) Inventor: LEE, Kisung, Suwon-si Gyeonggi-do 16677 (KR); KIM, Dongyoon, Suwon-si Gyeonggi-do 16677 (KR); KIM, Sungjoo, Suwon-si Gyeonggi-do 16677 (KR); KIM, Jongbae, Suwon-si Gyeonggi-do 16677 (KR); WEY, Hoseok, Suwon-si Gyeonggi-do 16677 (KR); LEE, Yoonjae, Suwon-si Gyeonggi-do 16677 (KR); LIM, Donghyun, Suwon-si Gyeonggi-do 16677 (KR); JANG, Yongseok, Suwon-si Gyeonggi-do 16677 (KR); CHUNG, Woosung, Suwon-si Gyeonggi-do 16677 (KR)
(74) Representative: Appleyard Lees IP LLP
(86) International application number: PCT/KR2024/010647
(87) International publication number: WO 2025/084556

(57) **Abstract**

An electronic apparatus, may include: a communication interface; at least one processor; the at least one processor configured to, based on a user input for a sound play being received, identify a target device capable of performing the sound play; identify a power state of the target device; based on the power state of the target device being identified as an off state, transmit a first wakeup signal for changing a power state of a speaker in the target device to an on state, to the target device through the communication interface; and based on a first response signal corresponding to the first wakeup signal being received, transmit a first control command for the sound play to the target device through the communication interface.

## Description

### [TECHNICAL FIELD]

The disclosure relates to an electronic apparatus and a controlling method thereof, and more particularly to an electronic apparatus that plays back audio content using a speaker of another device and a controlling method thereof.

### [BACKGROUND ART]

A peripheral apparatus having a speaker may output audio data as a basic function. A host apparatus may control the speaker in the peripheral apparatus. The host apparatus may control the peripheral apparatus to output new audio data separately from the basic function by using the speaker of the peripheral apparatus.

The host apparatus may analyze a power state of the peripheral apparatus to use the peripheral apparatus. If power of the peripheral apparatus is turned off, the host apparatus may transmit a wakeup signal (or a booting signal) to turn on power of the peripheral apparatus, to the peripheral apparatus.

If power of the peripheral apparatus for using the speaker of the peripheral apparatus is fully turned on when the peripheral apparatus is not performing the basic function, there is a problem of unnecessary power being wasted.

### [DISCLOSURE]

### [TECHNICAL SOLUTION]

The disclosure may improve the above-described problem, and may provide an electronic apparatus (and method) that controls power to be supplied to only a speaker of a machine subject to control, taking into consideration a power state of the machine subject to control.

According to one or more example embodiments, an electronic apparatus, may include: a communication interface; at least one processor; the at least one processor configured to: based on a user input for a sound play being received, identify a target device capable of performing the sound play; identify a power state of the target device; based on the power state of the target device being identified as an off state, transmit a first wakeup signal for changing a power state of a speaker in the target device to an on state, to the target device through the communication interface; and based on a first response signal corresponding to the first wakeup signal being received, transmit a first control command for the sound play to the target device through the communication interface.

The at least one processor may transmit, through the communication interface, a signal requesting power state information of the target device, to the target device; and based on the power state information of the target device being received through the communication interface, determine whether power state of the target device is in the off state based on the power state information.

The at least one processor may, based on the power state information of the target device not being received for a threshold time through the communication interface, transmit the first wakeup signal to the target device through the communication interface.

The at least one processor may, based on the first response signal corresponding to the first wakeup signal not being received for the threshold time, transmit a second wakeup signal for changing the power state of the target device to an on state, to the target device through the communication interface; and based on a second response signal corresponding to the second wakeup signal being received, transmit the first control command for the sound play to the target device through the communication interface.

The at least one processor may, based on the second response signal corresponding to the second wakeup signal not being received for the threshold time, provide a guide screen associated with the power state of the target device.

The at least one processor may, transmit, through a first wakeup pin of the communication interface, the first wakeup signal to the target device; and transmit, through a second wakeup pin of the communication interface, the second wakeup signal to the target device.

The at least one processor may, based on power state of the target device being in an on state, transmit a signal requesting authority for the speaker of the target device to the target device, through the communication interface; and based on a response signal corresponding to the signal requesting authority being received, transmit the first control command for the sound play to the target device, through the communication interface.

The electronic apparatus further may include a microphone. The at least one processor may, obtain, through the microphone, audio data while the target device is performing the sound play; distinguish a target audio signal and a noise audio signal associated with the sound play based on the audio data; and based on a first size of the noise audio signal being greater than or equal to a second size of the target audio signal, transmit a second control command for changing an output of the target device to the target device, through the communication interface.

The at least one processor may, transmit, through the communication interface, the second control command for increasing volume of the speaker in the target device, to the target device.

The at least one processor may, transmit, through the communication interface, the second control command for reducing noise output from the target device, to the target device.

According to one or more example embodiments, a method of controlling an electronic apparatus may include: based on a user input for a sound play being received, identifying a target device capable of performing the sound play; identifying a power state of the target device; based on power state of the target device being identified as in an off state, transmitting a first wakeup signal for changing power state of a speaker in the target device to an on state, to the target device; and based on a first response signal corresponding to the first wakeup signal being received, transmitting a first control command for the sound play, to the target device.

The identifying the power state of the target device may include: transmitting a signal requesting for power state information of the target device, to the target device; and based on the power state information of the target device being received, determining whether the power state of the target device is the off state based on the power state information.

The transmitting the first wakeup signal may include: based on the power state information of the target device not being received for a threshold time, transmitting the first wakeup signal to the target device.

The method further may include: based on the first response signal corresponding to the first wakeup signal not being received for the threshold time, transmitting a second wakeup signal for changing the power state of the target device to an on state, to the target device; and based on a second response signal corresponding to the second wakeup signal being received, transmitting the first control command for the sound play to the target device.

The method further may include: based on the second response signal corresponding to the second wakeup signal not being received for the threshold time, providing a guide screen associated with the power state of the target device.

According to one or more example embodiments, a method of controlling an electronic apparatus, may include: based on a user input for a sound play being received, identifying a target device capable of performing the sound play and capable of moving; identifying a power state of the target device; based on power state of the target device being identified as in an off state, transmitting a first wakeup signal for changing power state of a speaker in the target device to an on state, to the target device; based on a first response signal corresponding to the first wakeup signal being received, transmitting a first control command for the sound play, to the target device; obtaining position data of a user based on sensing data; based on the position data, determining whether the user has moved by a threshold distance or more since the transmitting of the first control command; and transmitting a second control command for moving the target device to a target position corresponding to a moved position of the user, to the target device.

The method further may include obtaining the sensing data through an image sensor.

The identifying the power state of the target device may include: transmitting a signal requesting for power state information of the target device, to the target device; and based on the power state information of the target device being received, determining whether the power state of the target device is the off state based on the power state information.

The transmitting the first wakeup signal may include: based on the power state information of the target device not being received for a threshold time, transmitting the first wakeup signal to the target device.

The method of further may include: based on the first response signal corresponding to the first wakeup signal not being received for the threshold time, transmitting a second wakeup signal for changing the power state of the target device to an on state, to the target device; and based on a second response signal corresponding to the second wakeup signal being received, transmitting the first control command for the sound play to the target device.

### [DESCRIPTION OF DRAWINGS]

FIG. 1 is a diagram illustrating a network including a plurality of apparatuses according to one or more embodiments;
FIG. 2 is a block diagram illustrating an electronic apparatus according to one or more embodiments;
FIG. 3 is a block diagram illustrating a detailed configuration of the electronic apparatus of FIG. 2 according to one or more embodiments;
FIG. 4 is a diagram illustrating a main device and a peripheral device according to one or more embodiments;
FIG. 5 is a diagram illustrating an operation for controlling a target device based on power state information according to one or more embodiments;
FIG. 6 is a diagram illustrating metadata of devices included in a network according to one or more embodiments;
FIG. 7 is a diagram illustrating different control operations according to a power state of a target device according to one or more embodiments;
FIG. 8 is a diagram illustrating an operation performed when power of a target device is in an on state according to one or more embodiments;
FIG. 9 is a diagram illustrating an operation performed when power of a target device is in an on state according to one or more embodiments;
FIG. 10 is a diagram illustrating a guide screen for controlling an output of a target device according to one or more embodiments;
FIG. 11 is a diagram illustrating an operation performed when power of a target device is in an off state according to one or more embodiments;
FIG. 12 is a diagram illustrating a guide screen for controlling power of a target device according to one or more embodiments;
FIG. 13 is a diagram illustrating an operation for providing a notification associated with a target device according to one or more embodiments;
FIG. 14 is a diagram illustrating an operation for moving a target device based on a movement of a user according to one or more embodiments;
FIG. 15 is a diagram illustrating an operation for moving a target device based on a movement of a user according to one or more embodiments;
FIG. 16 is a diagram illustrating an operation for controlling a target device based on a movement of a user according to one or more embodiments;
FIG. 17 is a diagram illustrating an operation for forming a channel using a plurality of target devices according to one or more embodiments;
FIG. 18 is a diagram illustrating an operation for using a host apparatus according to one or more embodiments;
FIG. 19 is a diagram illustrating a relationship of an electronic apparatus and a target device according to one or more embodiments;
FIG. 20 is a diagram illustrating a relationship of an electronic apparatus and a target device according to one or more embodiments; and
FIG. 21 is a diagram illustrating a controlling method of an electronic apparatus according to one or more embodiments.

### [DETAILED DESCRIPTION OF EXEMPLARY EMBODIMENTS]

The disclosure will be described in detail below with reference to the accompanying drawings.

Terms used in describing one or more embodiments of the disclosure are general terms selected that are currently widely used considering their function herein. However, the terms may change depending on intention, legal or technical interpretation, emergence of new technologies, and the like of those skilled in the related art. Further, in certain cases, there may be terms arbitrarily selected, and in this case, the meaning of the term will be disclosed in greater detail in a relevant description. Accordingly, the terms used herein are not to be understood simply as its designation but based on the meaning of the term and the overall context of the disclosure.

In the disclosure, expressions such as "have," "may have," "include," and "may include" are used to designate a presence of a corresponding characteristic (e.g., elements such as numerical value, function, operation, or component), and not to preclude a presence or a possibility of additional characteristics.

The expression at least one of A and/or B is to be understood as indicating any one of "A" or "B" or "A and B."

Expressions such as "1st", "2nd", "first" or "second" used in the disclosure may limit various elements regardless of order and/or importance, and may be used merely to distinguish one element from another element and not limit the relevant element.

When a certain element (e.g., a first element) is indicated as being "(operatively or communicatively) coupled with/to" or "connected to" another element (e.g., a second element), it may be understood as the certain element being directly coupled with/to the another element or as being coupled through other element (e.g., a third element).

A singular expression includes a plural expression, unless otherwise clearly specified in a context. It is to be understood that the terms such as "form" or "include" are used herein to designate a presence of a characteristic, number, operation, operation, element, component, or a combination thereof, and not to preclude a presence or a possibility of adding one or more of other characteristics, numbers, operations, operations, elements, components or a combination thereof.

The term "module" or "part" used herein perform at least one function or operation, and may be implemented with a hardware or software, or implemented with a combination of hardware and software. In addition, a plurality of "modules" or a plurality of "parts," except for a "module" or a "part" which needs to be implemented to a specific hardware, may be integrated in at least one module and implemented as at least one processor.

In the disclosure, the term "user" may refer to a person using an electronic device or an apparatus (e.g., an artificial intelligence electronic device) using the electronic device.

One or more embodiments of the disclosure will be described in greater detail below with reference to the accompanied drawings.

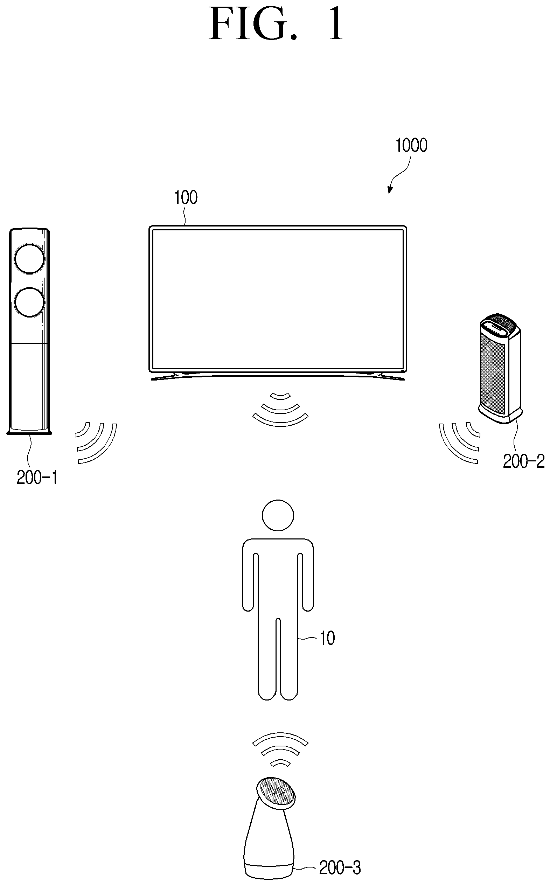

FIG. 1 is a diagram illustrating a network 1000 including a plurality of apparatuses according to one or more embodiments.

Referring to FIG. 1, the network 1000 may be a network to which a plurality of apparatuses is connected. In some embodiments, the plurality of apparatuses may include, for example, an apparatus 100, and devices 200-1, 200-2, and 200-3. The network 1000 may be an internet of things (IoT) network.

A user 10 may control at least one apparatus from among the plurality of apparatuses included in the network 1000.

The plurality of apparatuses may be distinguished into a host device and a peripheral device (i.e. sub device). The host device may directly receive a control command of the user 10. The peripheral device may indirectly receive the control command of the user 10 from the host device. The host device and the peripheral device may be changed according to a setting by the user 10.

In an example, an electronic apparatus 100 may be the host device, and the devices 200-1, 200-2, and 200-3 may be the peripheral devices.

The user 10 may simultaneously control the plurality of apparatuses. The plurality of apparatuses may perform an operation for a control command of the user 10.

The plurality of apparatuses may perform a control operation for a common command of the user 10.

The plurality of apparatuses may simultaneously perform one operation corresponding to the control command of the user 10. For example, if a music playback command of the user 10 is input, the plurality of apparatuses may playback the same music.

An operation corresponding to a control command of the user 10 may be different for each of the plurality of apparatuses. For example, if the music playback command of the user 10 is input, the electronic apparatus 100 may playback a portion for a first channel of a music, a first target device 200-1 may playback a portion for a second channel of the music, a second target device 200-2 may playback a portion for a third channel of the music, and a third target device 200-3 may playback a portion for a fourth channel of the music.

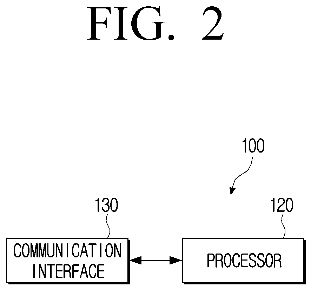

FIG. 2 is a block diagram illustrating the electronic apparatus 100 according to one or more embodiments.

Referring to FIG. 2, the electronic apparatus 100 may include at least one from among at least one processor 120 or a communication interface 130.

The communication interface 130 may perform a communication connection with a target device 200. The at least one processor 120 may transmit and receive a communication signal through the communication interface 130.

The at least one processor 120 may perform an overall control operation of the electronic apparatus 100. The at least one processor 120 may perform a function controlling the overall operation of the electronic apparatus 100.

The at least one processor 120 may identify, based on a user input for a sound play being received, the target device 200 capable of performing the sound play, identify a power state of the target device 200, transmit, based on power of the target device 200 being identified as in an off state, a first wakeup signal for changing power of a speaker 270 included in the target device 200 to an on state to the target device 200 through the communication interface 130, and transmit, based on a first response signal corresponding to the first wakeup signal being received, a first control command for the sound play to the target device 200 through the communication interface 130.

The at least one processor 120 may receive the user input for the sound play. The sound play may include a function for outputting (or playing back) an audio signal. The sound play may be described as playing back audio, outputting audio, and the like. For example, the sound play may include a command for playing back music.

The sound play may be included in a group command. The group command may indicate a user command for controlling a plurality of apparatuses. The group command may include a command for controlling at least one of the apparatuses from among the plurality of apparatuses included in the network 1000 or the plurality of apparatuses to which the host apparatus can connect to. The at least one processor 120 may receive the group command, and identify at least one apparatus to perform the group command based on the received group command. The at least one processor 120 may transmit the group command (or a control signal corresponding to the group command) to the identified at least one apparatus.

The group command may be described as a user group command, a user control command, a user simultaneous control command, a user input, a user command, and the like.

The network 1000 may include a plurality of apparatuses (or devices). The at least one processor 120 may identify the target device 200 capable of performing the sound play from among the plurality of apparatuses included in the network 1000. The target device 200 may include at least one apparatus.

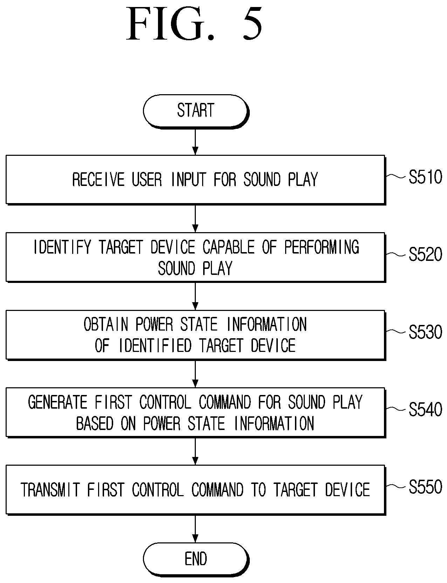

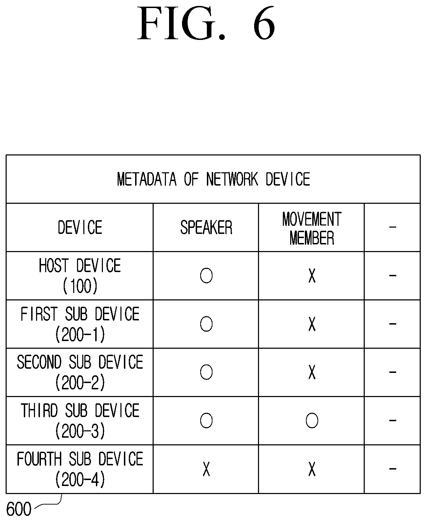

The at least one processor 120 may identify the target device 200 capable of performing the sound play by using metadata 600 in FIG. 6. Descriptions associated therewith will be described in FIG. 5 and FIG. 6.

After the target device 200 is identified, the at least one processor 120 may identify the power state of the target device 200. The at least one processor 120 may identify whether power of the target device 200 is currently in an on state or an off state.

The at least one processor 120 may transmit, through the communication interface 130, a signal requesting power state information of the target device 200 to the target device 200.

Based on the power state information of the target device 200 being received through the communication interface 130, the at least one processor 120 may identify the power state of the target device 200.

Based on the power state information of the target device 200 being received, the at least one processor 120 may determine power of the target device 200 as in an on state.

The at least one processor 120 may determine whether power of the target device 200 is in an on/off state based on the power state information.

The at least one processor 120 may transmit, based on the power state information of the target device 200 not being received for a threshold time through the communication interface 130, the first wakeup signal to the target device 200 through the communication interface 130.

Based on the power state information of the target device 200 not being received for a threshold time through the communication interface 130, the at least one processor 120 may determine power of the target device 200 as in an off state. The at least one processor 120 may attempt to change power of the target device 200 to an on state to perform the sound play from the target device 200 based on power of the target device 200 being in an off state.

There is no need for power of all hardware configurations of the target device 200 to be in an on state for performing the sound play. Only the speaker 270 included in the target device 200 has to be in an on state to perform the sound play. If power of the target device 200 is in an off state, the at least one processor 120 may first generate the first wakeup signal for changing power of the speaker 270 included in the target device 200 to an on state. The at least one processor 120 may transmit the first wakeup signal to the target device 200.

The at least one processor 120 may wait for the first response signal corresponding to the first wakeup signal. Based on the first response signal being received, the at least one processor 120 may recognize (or identify) that power of the speaker 270 included in the target device 200 has been changed to an on state.

Based on recognizing that power of the speaker 270 included in the target device 200 has been changed to an on state, the at least one processor 120 may transmit the first control command for the sound play to the target device 200.

The at least one processor 120 may transmit, based on the first response signal corresponding to the first wakeup signal not being received for a threshold time, a second wakeup signal for changing power of the target device 200 to an on state to the target device 200 through the communication interface 130

Based on the first response signal not being received, the at least one processor 120 may recognize that power of the speaker 270 included in the target device 200 is still in an off state.

Because power of the speaker 270 is in an off state despite the transmitting of the first wakeup signal, the at least one processor 120 may attempt to change the entire power of the target device 200 to an on state. This is because the target device 200 may not include a function of changing only power of the speaker 270 included in the target device 200.

The at least one processor 120 may generate the second wakeup signal for supplying the entire power of the target device 200 to control all hardware configurations included in the target device 200. The at least one processor 120 may transmit the second wakeup signal to the target device 200.

The at least one processor 120 may wait for a second response signal corresponding to the second wakeup signal.

Based on the second response signal being received, the at least one processor 120 may recognize (or identify) that power of the target device 200 has been changed to an on state.

Based on recognizing that power of the target device 200 has been changed to an on state, the at least one processor 120 may transmit the first control command for the sound play to the target device 200.

Based on the second response signal corresponding to the second wakeup signal being received, the first control command for the sound play may be transmitted to the target device 200 through the communication interface 130.

The at least one processor 120 may provide, based on the second response signal corresponding to the second wakeup signal not being received for a threshold time, a guide screen associated with the power state of the target device 200.

Based on both the first response signal corresponding to the first wakeup signal and the second response signal corresponding to the second wakeup signal not being received, the at least one processor 120 may determine that changing power of the target device 200 to an on state may not be possible by transmitting a wakeup signal. The at least one processor 120 may provide a guide screen associated therewith.

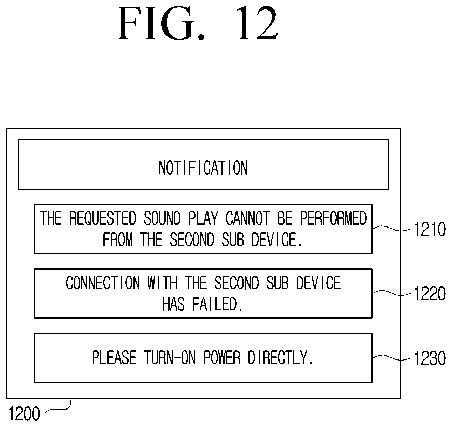

The guide screen may include at least one from among information indicating that power of the target device 200 cannot be changed to an on state, and information guiding the user 10 to directly change power of the target device 200 to an on state. Detailed descriptions associated therewith will be described in FIG. 12.

The at least one processor 120 may transmit, through a first wakeup pin 131 of the communication interface 130, the first wakeup signal to the target device 200, and transmit, through a second wakeup pin 132 of the communication interface 130, the second wakeup signal to the target device 200.

The communication interface 130 may include at least one from among the first wakeup pin 131, the second wakeup pin 132, and a data pin 133.

The first wakeup pin 131 may include a communication sub pin for changing power of a speaker (or a sound outputter) of another device to an on state.

The second wakeup pin 132 may include a communication sub pin for changing the entire power of another device to an on state.

The data pin 133 may include a communication sub pin for transmitting (or receiving) control command or data to another device.

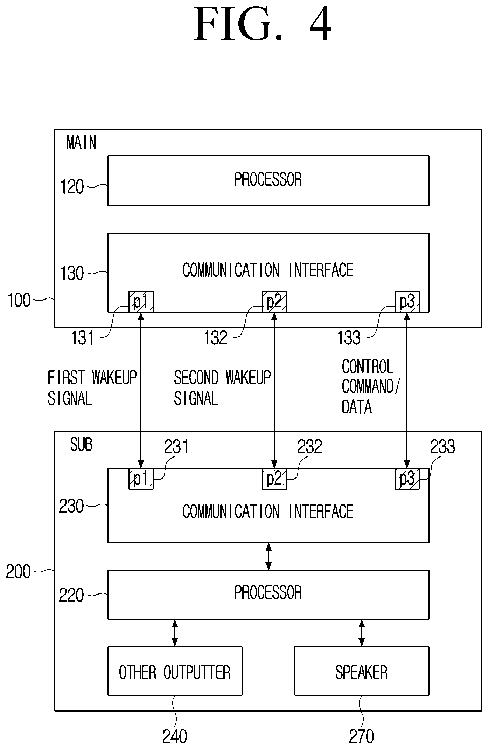

Detailed descriptions associated therewith will be described in FIG. 4.

The first wakeup pin 131 may be described as a first wakeup module. The second wakeup pin 132 may be described as a second wakeup module. The data pin 133 may be described as a data module.

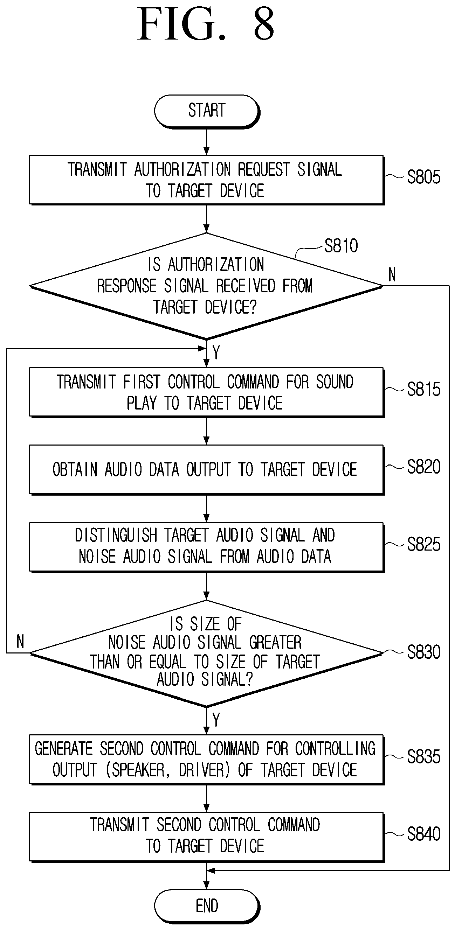

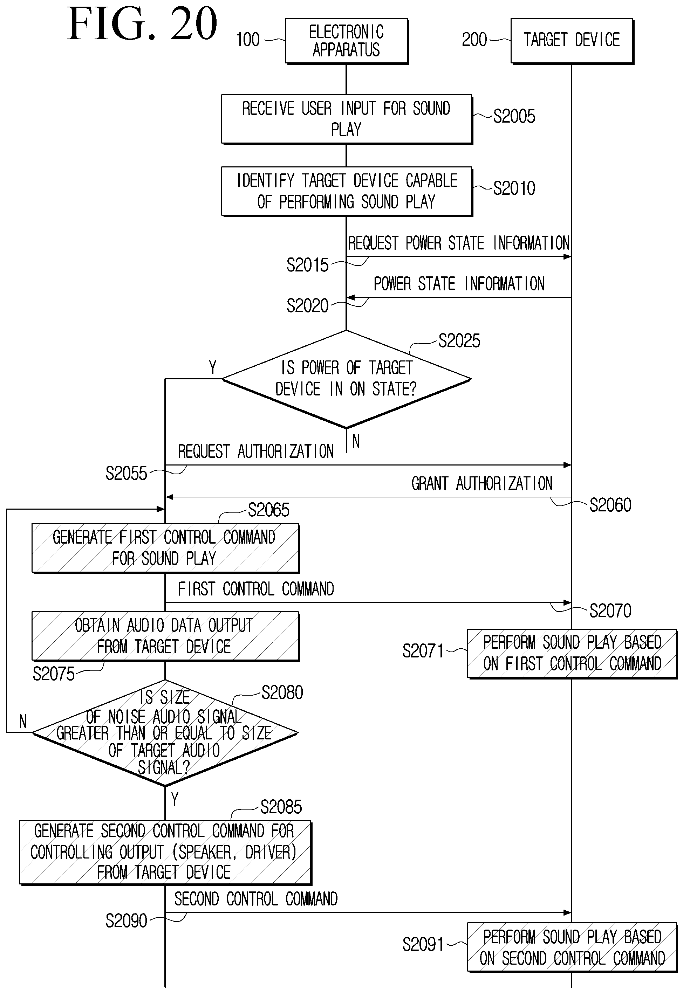

The at least one processor 120 may transmit, based on power of the target device 200 being in an on state, a signal requesting authority for the speaker of the target device 200 to the target device 200 through the communication interface 130, and transmit, based on a response signal corresponding to the signal requesting authority being received, the first control command for the sound play to the target device 200 through the communication interface 130. Detailed descriptions associated therewith will be described in FIG. 8 and FIG. 20.

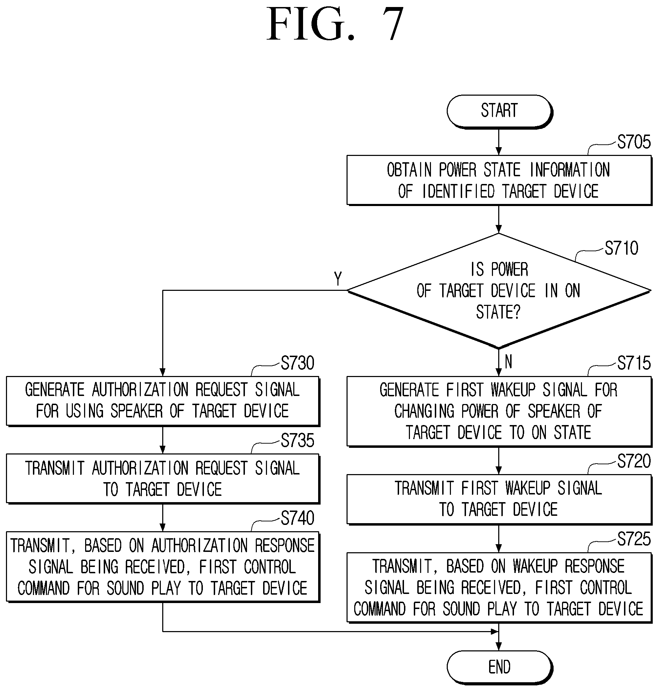

The electronic apparatus 100 may further include a microphone 180, and the at least one processor 120 may obtain, through the microphone, audio data while the target device 200 is performing the sound play, distinguish a target audio signal and a noise audio signal associated with the sound play based on the audio data, and transmit, based on a first size of the noise audio signal being greater than or equal to a second size of the target audio signal, a second control command for changing an output of the target device 200 to the target device 200 through the communication interface 130. Detailed descriptions associated therewith will be described in FIG. 7 and FIG. 8.

The electronic apparatus 100 may obtain audio characteristic information. The electronic apparatus 100 may distinguish the target audio signal and the noise audio signal based on the audio characteristic information. The audio characteristic information may include at least one from among a frequency spectrum, a frequency band energy, a spectrum average, a spectrum analysis, energy change information, amplitude change information, period change information, or a signal-to-noise ratio (SNR). The electronic apparatus 100 may distinguish the target audio signal and a noise signal from among a plurality of signals included in the audio data based on the audio characteristic information.

Based on power of the target device 200 being in an on state, the target device 200 may be in a state in which a driver is controlling for the target device 200 to generate energy necessary in driving. In an energy generating process, noise (e.g., a motor rotating sound or a mechanical sound) may be generated. Based on power of the target device 200 being in an on state, a sound playback may not be carried out normally due to the noise.

Based on power of the target device 200 being in an on state, the at least one processor 120 may measure noise of the target device 200.

Based on the noise of the target device 200 being identified as loud, the at least one processor 120 may transmit the second control command for increasing a volume the speaker 270 included in the target device 200 to the target device 200.

The at least one processor 120 may transmit, through the communication interface 130, the second control command for increasing the volume of the speaker 270 included in the target device 200 to the target device 200.

Based on the volume of the speaker 270 included in the target device 200 being increased, the user 10 may hear relatively less noise from the target device 200.

The volume may be described as a speaker output performance, or a speaker output size.

If the noise of the target device 200 is identified as big, the at least one processor 120 may transmit the second control command for noise reduction to the target device 200.

The at least one processor 120 may transmit, through the communication interface 130, the second control command for reducing the noise being output from the target device 200 to the target device 200.

The target device 200 may operate in a plurality of modes.

The target device 200 may operate in a first mode of performing only a typical basic function, a second mode of simultaneously performing the basic function and the sound play, and a third mode of performing only the sound play.

When operating in the first mode and the second mode, the target device 200 may have noise generated by a control of the driver. The driver may include hardware configurations associated with a motor control.

When the target device 200 operates in the first mode and the second mode, the at least one processor 120 may measure the noise.

When operating in the third mode, the target device 200 may control only the speaker 270 included in the target device 200. The noise may not be generated relatively loudly.

When the target device 200 operates in the third mode, the at least one processor 120 may not measure the noise.

When performing the sound play, the target device 200 may operate in the second mode or the third mode. When operating in the second mode, the at least one processor 120 may measure the noise of the target device 200.

According to one or more embodiments, based on the first size of the noise audio signal being greater than or equal to the second size of the target audio signal, the at least one processor 120 may transmit the second control command for the target device 200 to change from the second mode to the third mode to the target device 200.

According to one or more embodiments, based on the first size of the noise audio signal being greater than or equal to the second size of the target audio signal, the at least one processor 120 may transmit the second control command for reducing performance in the second mode to the target device 200.

The second control command for reducing performance in the second mode may include a command to lower output performance. For example, the second control command may include at least one from among a command for reducing wind strength, a command for lowering a setting temperature of an air conditioner, a command for stopping a sensing operation in real-time, and a command for stopping an automatic analysis function. The target device 200 may perform a control operation lowering performance and noise which can be generated may be reduced according to the second control command.

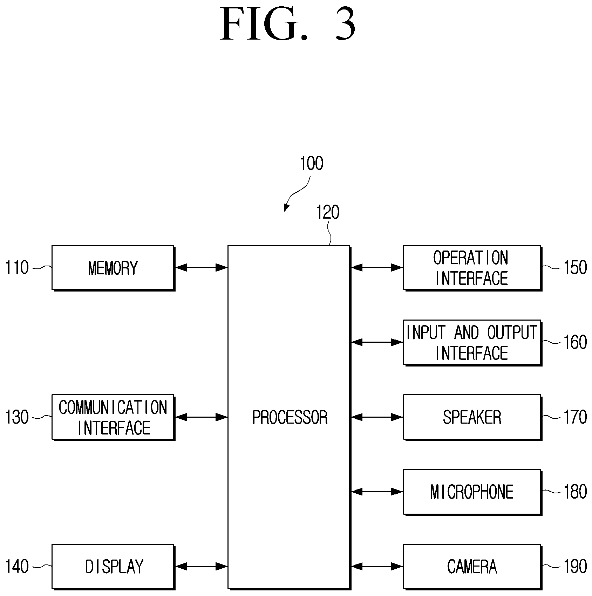

FIG. 3 is a block diagram illustrating a detailed configuration of the electronic apparatus 100 of FIG. 2 according to one or more embodiments.

Referring to FIG. 3, the electronic apparatus 100 may include at least one from among a memory 110, the at least one processor 120, the communication interface 130, a display 140, an operation interface 150, an input and output interface 160, a speaker 170, the microphone 180, and a camera 190.

The memory 110 may be implemented as an internal memory such as a read only memory (ROM) included in the at least one processor 120 (e.g., an electrically erasable programmable read-only memory (EEPROM)), a random access memory (RAM), or the like, or implemented as a memory separate from the at least one processor 120. The memory 110 may be implemented in a form of a memory embedded in the electronic apparatus 100 according to a data storage use, or in a form of a memory attachable to and detachable from the electronic apparatus 100. For example, the data for the driving of the electronic apparatus 100 may be stored in the memory embedded in the electronic apparatus 100, and data for an expansion function of the electronic apparatus 100 may be stored in the memory attachable to and detachable from the electronic apparatus 100.

The memory embedded in the electronic apparatus 100 may be implemented as at least one from among a volatile memory (e.g., a dynamic RAM (DRAM), a static RAM (SRAM), or a synchronous dynamic RAM (SDRAM)), or a non-volatile memory (e.g., a one time programmable ROM (OTPROM), a programmable ROM (PROM), an erasable and programmable ROM (EPROM), an electrically erasable and programmable ROM (EEPROM), a mask ROM, a flash ROM, a flash memory (e.g., NAND flash or NOR flash), a hard disk drive (HDD) or a solid state drive (SSD)), and the memory attachable to and detachable from the electronic apparatus 100 may be implemented in a form such as, for example, and without limitation, a memory card (e.g., a compact flash (CF), a secure digital (SD), a micro secure digital (micro-SD), a mini secure digital (mini-SD), an extreme digital (xD), a multi-media card (MMC), etc.), an external memory (e.g., a USB memory) connectable to a USB port, or the like.

The memory 110 may store at least one instruction. The at least one processor 120 may perform various operations based on the instructions stored in the memory 110.

The at least one processor 120 may be implemented as a digital signal processor (DSP) for processing a digital signal, a microprocessor, or a time controller (TCON). However, the embodiment is not limited thereto, and may include one or more from among a central processing unit (CPU), a micro controller unit (MCU), a micro processing unit (MPU), a controller, an application processor (AP), a graphics-processing unit (GPU), a communication processor (CP), or an advanced reduced instruction set computer (RISC) machines (ARM) processor, or may be defined by the relevant term. The at least one processor 120 may be implemented as a system on chip (SoC) or a large scale integration (LSI) in which a processing algorithm is embedded, and may be implemented in a form of a field programmable gate array (FPGA). The at least one processor 120 may perform various functions by executing computer executable instructions stored in the memory.

The communication interface 130 may be a configuration for performing communication with an external apparatus of various types according communication methods of various types. The communication interface 130 may include a wireless communication module or a wired communication module. Each communication module may be implemented in at least one hardware chip form.

The wireless communication module may be a module for communicating with the external apparatus via wireless means. For example, the wireless communication module may include at least one module from among a Wi-Fi module, Bluetooth module, an infrared communication module, or other communication modules.

The Wi-Fi module and the Bluetooth module may perform communication in a Wi-Fi method and a Bluetooth method, respectively. When using the Wi-Fi module or the Bluetooth module, various connection information such as a service set identifier (SSID) and a session key may be first transmitted and received, and various information may be transmitted and received after communicatively connecting using the same.

The infrared communication module may perform communication according to an infrared data association (IrDA) technology of transmitting data wirelessly in short range by using infrared rays present between visible rays and millimeter waves.

The other communication modules may include at least one communication chip which performs communication according to various wireless communication standards such as, for example, and without limitation, ZigBee, 3rd Generation (3G), 3rd Generation Partnership Project (3GPP), Long Term Evolution (LTE), LTE Advanced (LTE-A), 4th Generation (4G), 5th Generation (5G), and the like, in addition to the above-described communication methods.

The wired communication module may be a module that communicates with the external apparatus via wired means. For example, the wired communication module may include at least one from among a local area network (LAN) module, an Ethernet module, a pair cable, a coaxial cable, an optical fiber cable, or an ultra wide-band (UWB) module.

According to various embodiments, the communication interface 130 may use an external apparatus such as a remote control apparatus and a same communication module (e.g., Wi-Fi module) for communicating with an external server.

According to various embodiments, the communication interface 130 may use an external apparatus such as the remote control apparatus and a different communication module for communicating with the external server. For example, the communication interface 130 may use at least one from among an Ethernet module or the Wi-Fi module for communicating with the external server, and use the Bluetooth module for communicating with the external apparatus such as the remote control apparatus. However, this is merely one embodiment, and the communication interface 130 may use at least one communication module from among the various communication modules when communicating with a plurality of external apparatuses or an external server.

The display 140 may be implemented as a display of various forms such as a liquid crystal display (LCD), an organic light emitting diode (OLED) display, and a plasma display panel (PDP). In the display 140, a driving circuit, which may be implemented in a form of an amorphous silicon thin film transistor (a-si TFT), a low temperature poly silicon (LTPS) TFT, an organic TFT (OTFT), or the like, a backlight unit, and the like may be included. The display 140 may be implemented as a touch screen coupled with a touch sensor, a flexible display, a three-dimensional display (3D display), or the like. According to one or more embodiments of the disclosure, the display 140 may include not only a display panel for outputting an image, but also a bezel for housing the display panel. Specifically, according to one or more embodiments of the disclosure, the bezel may include a touch sensor for sensing a user interaction.

The operation interface 150 may be implemented as devices such as a button, a touch pad, a mouse, a keyboard, and the like, or implemented as a touch screen capable of performing the above-described display function and an operation input function together therewith. The button may be a button of various types such as a mechanical button, a touch pad, or a wheel which is formed at a random area at a front surface part or a side surface part, a rear surface part, or the like of an exterior of a main body of the electronic apparatus 100.

The input and output interface 160 may be any one interface from among a high definition multimedia interface (HDMI), a mobile high-definition link (MHL), a universal serial bus (USB), a display port (DP), Thunderbolt, a video graphics array (VGA) port, an RGB port, a D-subminiature (DSUB), and a digital visual interface (DVI). The input and output interface 160 may input and output at least one from among an audio signal and a video signal. According to one or more embodiments, the input and output interface 160 may be include a port for inputting and outputting only the audio signal and a port for inputting and outputting only the video signal as separate ports, or may be implemented as one port inputting and outputting both the audio signal and the video signal. The electronic apparatus 100 may transmit at least one from among the audio signal and the video signal to the external apparatus (e.g., an external display apparatus or an external speaker) through the input and output interface 160. An output port included in the input and output interface 160 may be connected with an external apparatus, and the electronic apparatus 100 may transmit at least one from among the audio signal and the video signal to the external apparatus through the output port.

The input and output interface 160 may be connected with the communication interface. The input and output interface 160 may transmit information received from an external device to the communication interface, or transmit information received through the communication interface to the external device.

The speaker 170 may be an element which outputs not only various audio data, but also various notification sounds, voice messages, and the like.

The microphone 180 may be a configuration for receiving input of a user voice or other sounds and converting to audio data. The microphone 180 may receive the user voice in an activated state. For example, the microphone 180 may be formed integrally at an upper side or a front surface direction, a side surface direction, and the like of the electronic apparatus 100. The microphone 180 may include various configurations such as a microphone that collects sound in an analog form, an amplifier circuit that amplifies the collected user voice, an A/D converter circuit that samples the amplified user voice and converts to a digital signal, a filter circuit that removes noise components from the converted digital signal, and the like.

The camera 190 may be a configuration for generating captured images by capturing a subject, and the captured image may be a concept which includes both a moving image and a still image. The camera 190 may obtain an image of at least one external device, and may be implemented with a camera, a lens, an infrared sensor, and the like.

The camera 190 may include a lens and an image sensor. Types of lenses may include a typical generic-purpose lens, a wide-angle lens, a zoom lens, and the like, and may be determined according to a type, a characteristic, a use environment, and the like of the electronic apparatus 100. For the image sensor, a complementary metal oxide semiconductor (CMOS), a charge coupled device (CCD), and the like may be used.

FIG. 4 is a diagram illustrating a main device and a peripheral device according to one or more embodiments.

Referring to FIG. 4, it may be assumed that the main device is the electronic apparatus 100 and the peripheral device is the target device 200.

The electronic apparatus 100 may include at least one from among the at least one processor 120 and the communication interface 130.

The communication interface 130 may include at least one from among the first wakeup pin 131, the second wakeup pin 132, and the data pin 133.

The first wakeup pin 131 may be a pin for controlling power of a specific hardware configuration from among a plurality of hardware configurations included in another device. For example, the first wakeup pin 131 may be a pin for controlling power of the speaker 270 included in the target device 200.

The second wakeup pin 132 may be a pin for controlling power of another device. For example, the second wakeup pin 132 may be a pin for controlling power of the target device 200.

The data pin 133 may be a pin for controlling a control command or a flow of data (or signal) corresponding to the control command. The data pin 133 may include at least one from among a transmitting pin (TX) or a receiving pin (RX).

The target device 200 may include at least one from among at least one processor 220, a communication interface 230, other outputter 240, and the speaker 270.

The communication interface 230 may include at least one from among a first wakeup pin 231, a second wakeup pin 232, and a data pin 233.

The first wakeup pin 231 may be a pin for controlling power of a specific hardware configuration from among a plurality of hardware configurations included in another device. For example, the first wakeup pin 231 may be a pin for controlling power of the speaker 270 included in the target device 200.

The second wakeup pin 232 may be a pin for controlling power of another device. For example, the second wakeup pin 232 may be a pin for controlling power of the target device 200.

The data pin 233 may be a pin for controlling a control command or a flow of data (or signal) corresponding to the control command. The data pin 233 may include at least one from among a transmitting pin (TX) or a receiving pin (RX).

The electronic apparatus 100 may transmit the first wakeup signal to the target device 200 using the first wakeup pin 131. The target device 200 may receive the first wakeup signal of the electronic apparatus 100 using the first wakeup pin 231. When the first wakeup signal is received, the target device 200 may control power of the speaker to an on state. If the first wakeup signal is received while power of the speaker 270 is in an off state, the target device 200 may change power of the speaker 270 to an on state.

The electronic apparatus 100 may transmit the second wakeup signal to the target device 200 using the second wakeup pin 132. The target device 200 may receive the second wakeup signal of the electronic apparatus 100 using the second wakeup pin 232. When the second wakeup signal is received, the target device 200 may control the entire power to an on state. If the second wakeup signal is received while power is in an off state, the target device 200 may change the entire power to an on state.

The electronic apparatus 100 may transmit at least one from among a control command or data to the target device 200 using the data pin 133. The target device 200 may receive at least one from among the control command or data transmitted from the electronic apparatus 100 using the data pin 233.

When the control command is received while the entire power of the target device 200 is in an on state, the target device 200 may control at least one from among the other outputter 240 and the speaker 270 based on the control command.

When the control command is received while power of the speaker 270 of the target device 200 is in an on state, the target device 200 may control only the speaker 270 based on the control command.

FIG. 5 is a diagram illustrating an operation for controlling the target device 200 based on power state information according to one or more embodiments.

The electronic apparatus 100 may receive a user input for a sound play (S510). The sound play may be described as a group sound play. The sound play may be included a group control command. The group control command may include a command for controlling as a group from among a plurality of apparatuses included in a network. A group may include at least one apparatus. The group distinguished based on a preset condition (or criterion) may be controlled based on the group control command.

The electronic apparatus 100 may identify the target device 200 capable of performing the sound play (S520). The electronic apparatus 100 may identify the target device 200 based on a user input. The electronic apparatus 100 may identify a function necessary in performing the control command by analyzing the user input. The electronic apparatus 100 may identify the target device 200 capable of performing the identified function.

For example, if the identified function is playing back music, the electronic apparatus 100 may identify the target device 200 capable of playing back music. The electronic apparatus 100 may identify the target device 200 included with a speaker for playing back music.

The electronic apparatus 100 may obtain power state information of the identified target device 200 (S530). The electronic apparatus 100 may request power state information to the target device 200. The electronic apparatus 100 may transmit a signal requesting a power state of the target device 200. The target device 200 may transmit the power state information in response to the request by the electronic apparatus 100. The electronic apparatus 100 may receive the power state information from the target device 200.

The electronic apparatus 100 may generate the first control command for the sound play based on the power state information (S540). The electronic apparatus 100 may transmit the first control command to the target device (S550). The first control command may include instructions associated with a control operation for the sound play from the target device 200 and/or data (e.g., music data) corresponding to the sound play.

FIG. 6 is a diagram illustrating metadata of devices included in a network according to one or more embodiments.

Referring to FIG. 6, the electronic apparatus 100 may include metadata 600 for a plurality of apparatuses included in the network 1000. The metadata 600 may include information indicating performances or functions of the plurality of apparatuses. The metadata 600 may include at least one from among whether a speaker is included or whether a movement member is included.

The electronic apparatus 100 may identify a device that includes a specific hardware using information included in the metadata 600. The electronic apparatus 100 may identify a device capable of performing a specific function by using information included in the metadata 600.

FIG. 7 is a diagram illustrating different control operations according to a power state of the target device 200 according to one or more embodiments.

Referring to FIG. 7, the electronic apparatus 100 may obtain power state information of the identified target device 200 (S705). Operation S705 may correspond to operation S530 in FIG. 5.

Based on power of the target device 200 not being in an on state (S S710-N), the electronic apparatus 100 may generate the first wakeup signal for changing power of the speaker 270 of the target device 200 to an on state (S715).

The electronic apparatus 100 may transmit the first wakeup signal to the target device 200 (S720). The electronic apparatus 100 may transmit the first wakeup signal to the target device 200 through the first wakeup pin 131 included in the communication interface 130.

The electronic apparatus 100 may receive a wakeup response signal from the target device 200. The wakeup response signal may include information notifying that power of the speaker 270 included in the target device 200 has been changed to an on state based on the first wakeup signal.

When the wakeup response signal is received, the electronic apparatus 100 may transmit the first control command for the sound play to the target device 200 (S725). The electronic apparatus 100 may transmit the first control command to the target device 200 through the data pin 133 of the communication interface 130.

Based on power of the target device being in an on state (S710-Y), the electronic apparatus 100 may generate an authorization request signal for using the speaker 270 included in the target device 200 (S730).

The electronic apparatus 100 may transmit the authorization request signal to the target device 200 (S735). The electronic apparatus 100 may transmit the authorization request signal to the target device 200 using the data pin 133 included in the communication interface 130.

The electronic apparatus 100 may receive an authorization response signal from the target device 200. The authorization response signal may include information indicating that authorization for controlling the speaker 270 included in the target device 200 is granted based on the authorization request signal.

When the authorization response signal is received, the electronic apparatus 100 may transmit the first control command for the sound play to the target device 200 (S740). The electronic apparatus 100 may transmit the first control command to the target device 200 through the data pin 133 of the communication interface 130.

FIG. 8 is a diagram illustrating an operation performed when power of the target device 200 is in an on state according to one or more embodiments.

Referring to FIG. 8, the electronic apparatus 100 may transmit an authorization request signal to the target device 200 (S805). Operation S805 may correspond to operations S730 and S735 in FIG. 7.

The electronic apparatus 100 may determine whether the authorization response signal is received from the target device 200 (S810).

Based on the authorization response signal being received (S810-Y), the electronic apparatus 100 may transmit the first control command for the sound play to the target device 200 (S815).

The electronic apparatus 100 may obtain audio data output to the target device 200 (S820). The electronic apparatus 100 may record an audio signal being output from a surrounding environment through the microphone 180. The electronic apparatus 100 may obtain audio data including the audio signal which is output from the surrounding environment through the microphone 180.

The electronic apparatus 100 may distinguish (or classify, or identify) the target audio signal and the noise audio signal from the audio data (S825). The target audio signal may indicate a target desired for listening by the user. For example, the target audio signal may include a music audio signal.

The electronic apparatus 100 may obtain audio characteristic information. The electronic apparatus 100 may distinguish the target audio signal and the noise audio signal based on the audio characteristic information. The audio characteristic information may include at least one from among a frequency spectrum, a frequency band energy, a spectrum average, a spectrum analysis, energy change information, amplitude change information, period change information, or a signal-to-noise ratio (SNR). The electronic apparatus 100 may distinguish the target audio signal and the noise signal from among a plurality of signals included in the audio data based on the audio characteristic information.

The electronic apparatus 100 may obtain the size of the target audio signal. The electronic apparatus 100 may obtain an average size of the target audio signal for a preset time.

The electronic apparatus 100 may obtain the size of the noise audio signal. The electronic apparatus 100 may obtain an average size of the noise audio signal for a preset time.

The size may be described as a size value, an amplitude value, size information, and the like.

The electronic apparatus 100 may determine whether the size of the noise audio signal is greater than or equal to the size of the target audio signal (S830).

Based on the size of the noise audio signal not being greater than or equal to the size of the target audio signal (S830-N), the electronic apparatus 100 may perform operations S815, S820, S825, and S830. Based on the size of the noise audio signal not being greater than or equal to the size of the target audio signal even after the preset time has passed, the electronic apparatus 100 may no longer obtain the audio data.

Based on the size of the noise audio signal being greater than or equal to the size of the target audio signal (S830-Y), the electronic apparatus 100 may generate the second control command for controlling the output of the target device 200 (S835). The electronic apparatus 100 may transmit the second control command to the target device 200. The electronic apparatus 100 may transmit the second control command to the target device 200 through the data pin 133 of the communication interface 130.

According to one or more embodiments, the electronic apparatus 100 may control the output of the speaker 270 included in the target device 200. The electronic apparatus 100 may generate the second control command for changing the volume of the speaker 270. If the noise signal is determined as big, the electronic apparatus 100 may generate the second control command for increasing the volume of the speaker 270 included in the target device 200.

According to one or more embodiments, the electronic apparatus 100 may control an output of a driver of the target device 200. The electronic apparatus 100 may generate the second control command for lowering performance of the driver (e.g., a motor) of the target device 200. The electronic apparatus 100 may generate the second control command for the driver of the target device 200 to output a smaller noise (e.g., a motor rotation sound). For example, the electronic apparatus 100 may generate the second control command for changing the target device 200 from a normal mode to a power saving mode. The electronic apparatus 100 may generate the second control command for changing the target device 200 from a high-performance mode to the normal mode (or the power saving mode).

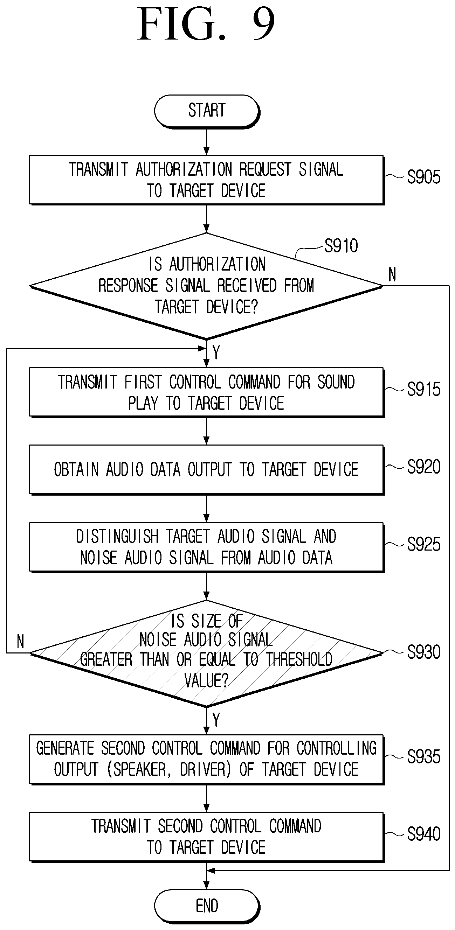

FIG. 9 is a diagram illustrating an operation performed when power of the target device 200 is in an on state according to one or more embodiments.

Operations S905, S910, S915, S920, S925, S935, and S940 in FIG. 9 may correspond to operations S805, S810, S815, S820, S825, S835, and S840 in FIG. 8. Redundant descriptions thereof will be omitted.

The electronic apparatus 100 may obtain audio data including the audio signal output from the surrounding environment. The electronic apparatus 100 may extract the noise audio signal from the audio data. The electronic apparatus 100 may obtain the size of the noise audio signal. The electronic apparatus 100 may obtain the average size of the noise audio signal during the preset time.

The electronic apparatus 100 may determine whether the size of the noise audio signal is greater than or equal to a threshold value (S930). The threshold value may be changed according to a setting by the user.

Based on the size of the noise audio signal not being greater than or equal to the threshold value (S930-N), the electronic apparatus 100 may perform operations S915, S920, S925, and S930. Based on the size of the noise audio signal not being greater than or equal to the threshold value even after the preset time has passed, the electronic apparatus 100 may no longer obtain the audio data.

Based on the size of the noise audio signal being greater than or equal to the threshold value (S930-Y), the electronic apparatus 100 may perform operations S935 and S940.

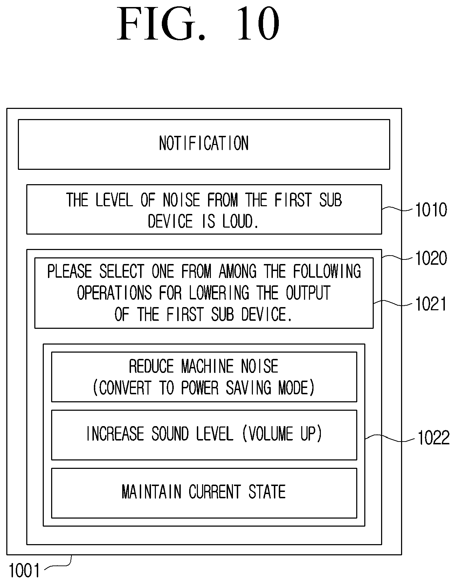

FIG. 10 is a diagram illustrating a guide screen for controlling an output of the target device 200 according to one or more embodiments.

Referring to FIG. 10, the electronic apparatus 100 may provide (or output, or display) a guide screen 1001 prior to generating the second control command from the embodiments of FIG. 8 and FIG. 9.

Based on the size of the noise audio signal being greater than or equal to the size of the target audio signal (S830-Y), the electronic apparatus 100 may provide the guide screen 1001.

Based on the size of the noise audio signal being greater than or equal to the threshold value (S930-Y), the electronic apparatus 100 may provide the guide screen 1001.

The guide screen 1001 may include at least one from among a UI 1010 for notifying that a noise level of a specific peripheral device (e.g., the target device 200) is loud, and a UI 1022 for guiding a control operation.

The UI 1022 may include at least one from among an operation for reducing noise generated from the target device 200, an operation for increasing a sound level output from the target device 200, and an operation for maintaining a current state.

When a user input in received through the UI 1022, the electronic apparatus 100 may generate the second control command based on the user input.

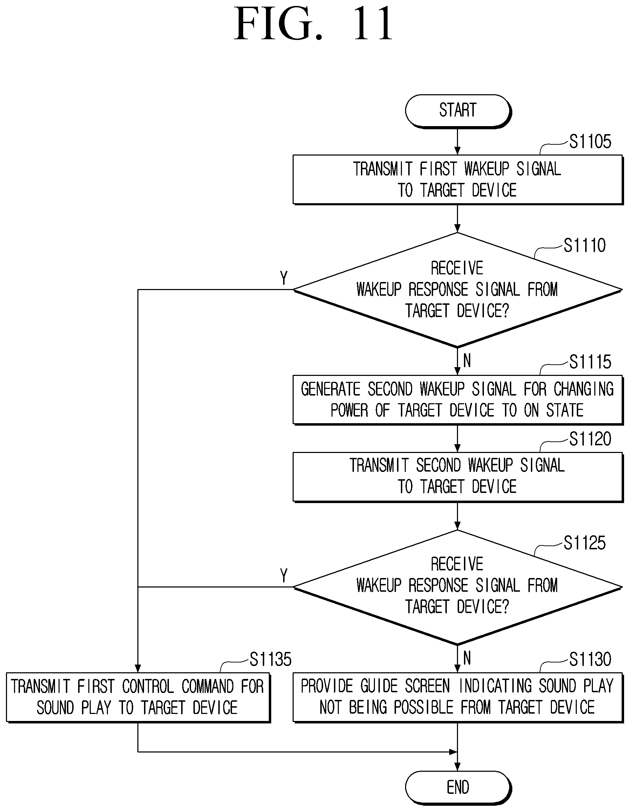

FIG. 11 is a diagram illustrating an operation performed when power of the target device 200 is in an off state according to one or more embodiments.

Referring to FIG. 11, the electronic apparatus 100 may transmit the first wakeup signal to the target device 200 (S1105). Operation S1105 may correspond to operation S715 in FIG. 7.

The electronic apparatus 100 may determine whether the wakeup response signal has been received from the target device 200 (S1110). The electronic apparatus 100 may identify whether the power state of the speaker 270 included in the target device 200 has been changed to an on state according to whether the wakeup response signal is received.

Based on the wakeup response signal being received, the electronic apparatus 100 may recognize that power of the speaker 270 included in the target device 200 has been changed to an on state.

Based on the wakeup response signal not being received for a preset time, the electronic apparatus 100 may recognize that power of the speaker 270 included in the target device 200 is still in an off state.

Based on the wakeup response signal being received (S1110-Y), the electronic apparatus 100 may transmit the first control command for the sound play to the target device 200 (S1135).

Based on the wakeup response signal not being received (S1110-N), the electronic apparatus 100 may generate the second wakeup signal for changing power of the target device 200 to an on state (S1115). Based on power of the speaker 270 included in the target device 200 not being changed to an on state, the electronic apparatus 100 may attempt to change the entire power of the target device 200 to an on state. This is because changing only power of the speaker separately to an on state may not be possible according to a device type.

The electronic apparatus 100 may transmit the second wakeup signal to the target device 200 (S1120). The electronic apparatus 100 may transmit the second wakeup signal to the target device 200 through the second wakeup pin 132 of the communication interface 130.

The electronic apparatus 100 may determine whether the wakeup response signal has been received from the target device 200 (S1125). The electronic apparatus 100 may receive the wakeup response signal for the second wakeup signal.

The electronic apparatus 100 may identify whether the power state of the target device 200 has been changed to an on state according to whether the wakeup response signal is received.

Based on the wakeup response signal being received, the electronic apparatus 100 may recognize that power of the target device 200 has been changed to an on state.

Based on the wakeup response signal not being received for a preset time, the electronic apparatus 100 may recognize that power of the target device 200 is still in an off state.

Based on the wakeup response signal being received (S1125-Y), the electronic apparatus 100 may transmit the first control command for the sound play to the target device 200 (S1135).

Based on the wakeup response signal not being received (S1125-N), the electronic apparatus 100 may provide a guide screen indicating that the sound play is not possible from the target device 200 (S1130). Descriptions associated with the guide screen will be described in FIG. 12.

The wakeup response signal in operation S1110 may be described as a first wakeup response signal. The wakeup response signal in operation S1125 may be described as a second wakeup response signal.

FIG. 12 is a diagram illustrating a guide screen for controlling power of the target device 200 according to one or more embodiments.

Referring to FIG. 12, the electronic apparatus 100 may provide (or output, or display) a guide screen 1200 based on a preset event.

The preset event may include an event of recognizing that power of the speaker 270 included in the target device 200 and power of the target device 200 have not been changed to an on state.

The guide screen 1200 may include at least one from among a UI 1210 for indicating that a user command (e.g., sound play) cannot be performed from a specific device, a UI 1220 for indicating a reason as to why the user command cannot be performed in the specific device, and a UI 1230 for indicating a guide operation.

The UI 1230 may include information requesting for power of a specific device to be changed to an on state by the user directly.

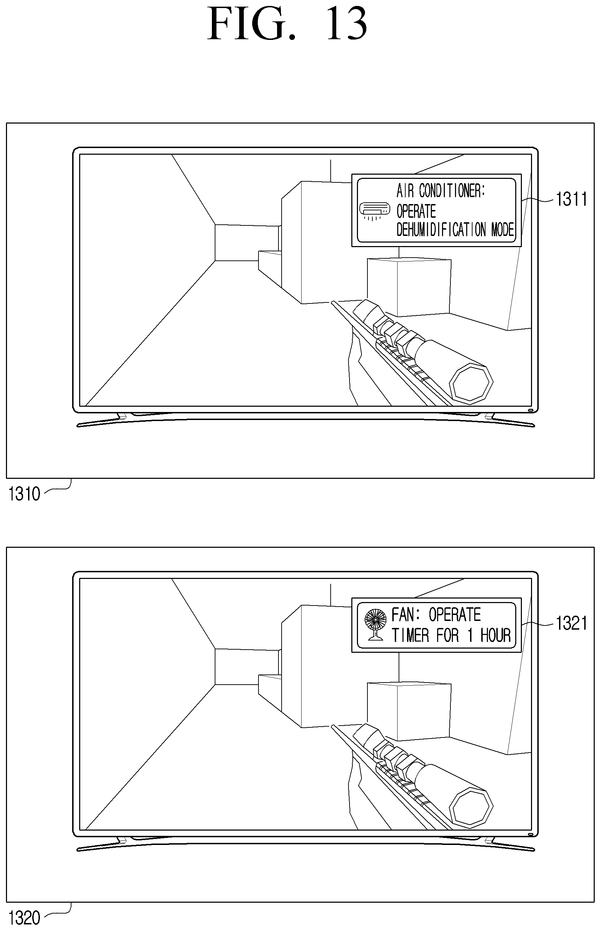

FIG. 13 is a diagram illustrating an operation for providing a notification associated with the target device 200 according to one or more embodiments.

Referring to FIG. 13, it may be assumed that the target device 200 is outputting (or playing back) the sound play according to the first control command. The target device 200 may playback the sound play through the speaker 270. The target device 200 may use the speaker 270 according to the first control command received from the electronic apparatus 100 corresponding to an external apparatus and not a basic function.

The target device 200 may recognize an occurrence of a preset event while outputting the sound play corresponding to the first control command through the speaker 270.

The preset event may include a notification event for a basic function performed from the target device 200. The notification event may include at least one from among a notification indicating a start of a key function of the target device 200, a notification indicating an end of the key function, a notification indicating an event in which an error has occurred, an event for warning, and a change in the key function.

If a preset event has occurred in a situation in which the sound play according to the first control command has not been output, the target device 200 may provide a notification through the speaker 270 included in the target device 200.

If the preset event has occurred in a situation in which the sound play according to the first control command is being output, the target device 200 may not be able to use the speaker 270 included in the target device 200. This is because the speaker 270 is already in use.

If the preset event has occurred in a situation in which the sound play according to the first control command is being output, the target device 200 may transmit information associated with the event to the electronic apparatus 100.

Information associated with the event may include at least one from among notification information indicating an occurrence of an event and event information indicating an event content. For example, the notification information may include information indicating that an event triggering a provision of notification through the speaker 270 from the target device 200 has occurred. The event information may include information indicating what the notification provided from the target device 200 is. The event information may include content of the preset event.

The information associated with the event has been described distinguishing the notification information and the event information. According to various embodiments, the notification information and the event information may be described as one notification information.

Instead of providing notifications through audio data output through the speaker 270 of the target device 200, the electronic device (apparatus 100) may provide notifications using image data.

The electronic apparatus 100 may receive information associated with an event received from the target device 200. The electronic apparatus 100 may generate a notification user interface (UI) based on information associated with the event. The notification UI may include at least one from among identification information indicating the target device 200, a graphic user interface (GUI) indicating the target device 200, information indicating a notification type, and information indicating a notification content.

According to one or more embodiments 1310, the electronic apparatus 100 may provide (or output, or display) a notification UI 1311 associated with a present event which occurred from the target device 200. For example, the UI 1311 may include a GUI indicating that the target device 200 is an air conditioner, and text information indicating that the air conditioner is operating in a dehumidification mode.

According to one or more embodiments 1320, the electronic apparatus 100 may provide (or output, or display) a notification UI 1321 associated with a present event which occurred from the target device 200. For example, the UI 1321 may include a GUI indicating that the target device 200 is a fan, and text information indicating that the fan is operating a timer function of one hour.

Based on information associated with the event being received from the target device 200, the electronic apparatus 100 may generate the notification UIs 1311 and 1321, and provide the generated notification UIs 1311 and 1321 for a preset time. The preset time may be changed according to setting by the user.

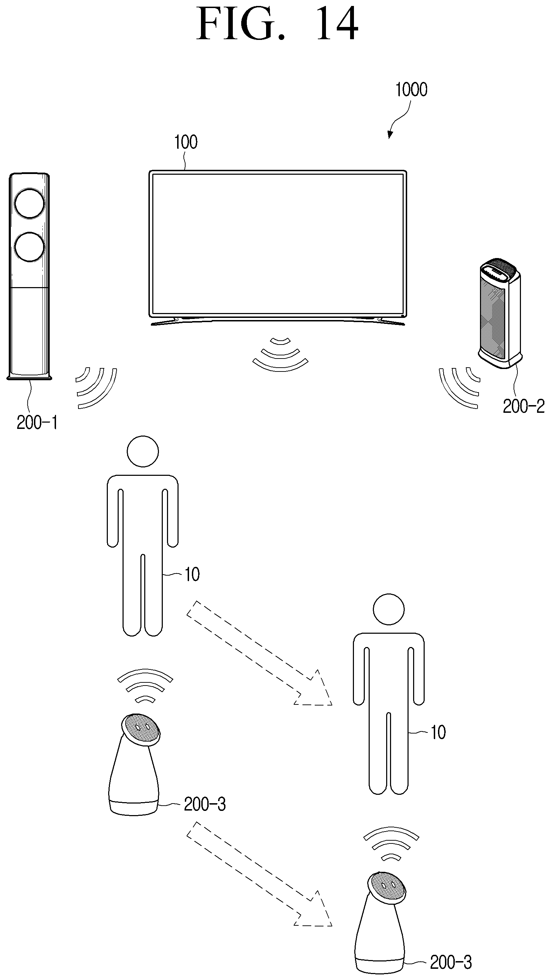

FIG. 14 is a diagram illustrating an operation for moving the target device 200 based on a movement of the user according to one or more embodiments.

Referring to FIG. 14, the electronic apparatus 100 may determine a position of the user 10 in real-time. The electronic apparatus 100 may include a sensor part. The electronic apparatus 100 may obtain sensing data for determining the position of the user 10 through the sensor part.

For example, the sensor part may include an image sensor. The electronic apparatus 100 may determine (or measure) the position of the user 10 based on sensing data obtained through the image sensor. The sensing data may be captured data.

Based on an event of the user 10 moving being identified, the electronic apparatus 100 may move a portion of the apparatuses from among the plurality of apparatuses included in the network 1000.

The electronic apparatus 100 may track the user 10, and generate a control command for moving the portion of the apparatuses to the position of the user 10. The apparatus included in the network 1000 may be distinguished to a movable apparatus and an immovable apparatus. The electronic apparatus 100 may identify the movable apparatus using the metadata 600 in FIG. 6.

The electronic apparatus 100 may identify whether the user 10 has moved by a threshold distance or more based on the sensing data. If the user 10 has moved by the threshold distance or more, the electronic apparatus 100 may generate a control command for a portion of the apparatuses 200-3 to move to the position to which the user 10 moved. The electronic apparatus 100 may transmit the generated control command to the portion of the apparatuses 200-3. The portion of the apparatuses 200-3 may move to the position of the user 10 moved according to the received control command.

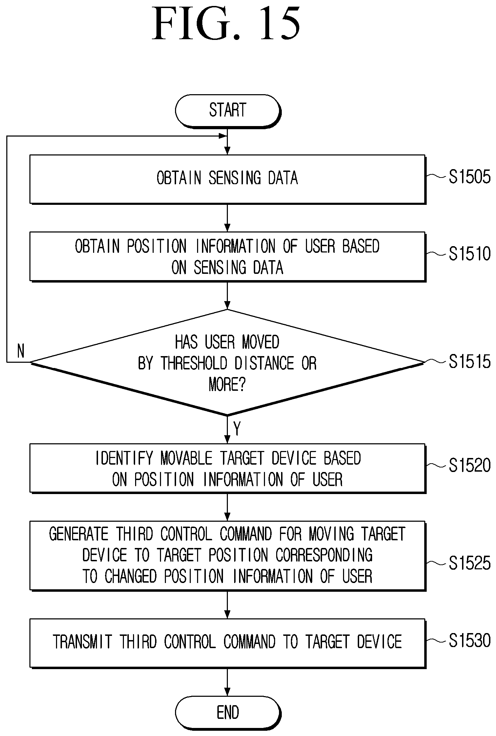

FIG. 15 is a diagram illustrating an operation for moving the target device 200 based on a movement of the user according to one or more embodiments.

Referring to FIG. 15, the electronic apparatus 100 may obtain sensing data through the sensor part (S1505).

According to one or more embodiments, the sensor part may include the image sensor for sensing the position of the user 10. The electronic apparatus 100 may obtain a captured image through the image sensor. The electronic apparatus 100 may identify the position of the user 10 based on the captured image.

According to one or more embodiments, the electronic apparatus 100 may receive position information indicating the real-time position of the user 10 from an external apparatus. The position information may include GPS information. The external apparatus may include a terminal device of the user 10. The terminal device of the user 10 may include at least one from among a smartphone or a wearable device.

The electronic apparatus 100 may obtain the position information of the user 10 based on sensing data (S1510). The electronic apparatus 100 may determine the real-time position of the user 10 based on the sensing data.

The electronic apparatus 100 may determine whether the user 10 has moved by the threshold distance or more based on the sensing data (S1515). The threshold distance may be changed according to a setting by the user.

Based on the user 10 not having moved by the threshold distance or more (S1515-N), the electronic apparatus 100 may perform operations S1505, S1510, and S1515.

Based on the user 10 having moved by the threshold distance or more (S1515-Y), the electronic apparatus 100 may identify the movable target device 200 based on the position information of the user 10 (S1520). The electronic apparatus 100 may use the metadata 600 in FIG. 6 to identify the movable target device 200.

The electronic apparatus 100 may generate a third control command for moving the target device 200 to a target position corresponding to the changed position information of the user (S1525). The target position may indicate a current position of the user 10.

The electronic apparatus 100 may transmit the third control command to the target device 200 (S1530). The electronic apparatus 100 may transmit the third control command to the target device 200 using the data pin 133 of the communication interface 130.

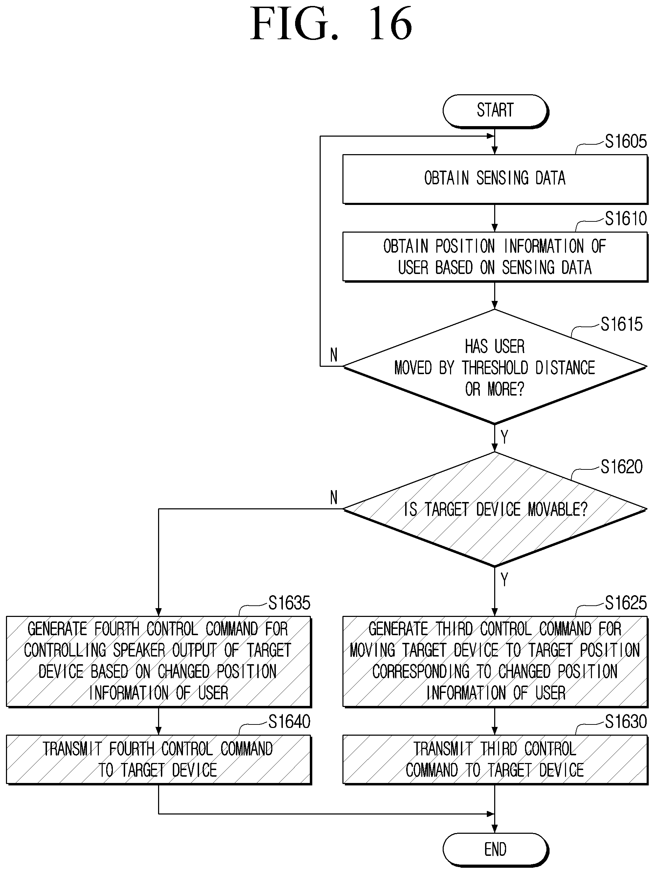

FIG. 16 is a diagram illustrating an operation for controlling the target device 200 based on a movement of the user according to one or more embodiments.

Operations S1605, S1610, and S1615 in FIG. 16 may correspond to operations S1505, S1510, and S1515 in FIG. 15. Redundant descriptions will be omitted.

Based on the user 10 having moved by the threshold distance or more (S1615-Y), the electronic apparatus 100 may identify whether the target device 200 which is outputting the sound play is movable (S1620). The electronic apparatus 100 may determine whether the target device 200 which is outputting the sound play is movable to the current position (the target position) of the user 10 using the metadata 600 in FIG. 6.

The target device 200 which is outputting the sound play may include at least one device.

Based on the target device 200 being identified as movable (S1620-Y), the electronic apparatus 100 may generate the third control command for moving the target device 200 to the target position corresponding to the changed position information of the user (S1625). The electronic apparatus 100 may transmit the third control command to the target device (S1630). The electronic apparatus 100 may transmit the third control command to the target device 200 using the data pin 133 of the communication interface 130.

Based on the target device 200 being identified as immovable (S1620-N), the electronic apparatus 100 may generate a fourth control command for controlling an output of the speaker 270 included in the target device 200 based on the changed position information of the user (S1635). The electronic apparatus 100 may transmit the fourth control command to the target device 200 (S1640). The electronic apparatus 100 may transmit the fourth control command to the target device 200 using the data pin 133 of the communication interface 130.

The fourth control command may include a command for increasing the volume of the speaker 270 included in the target device 200.

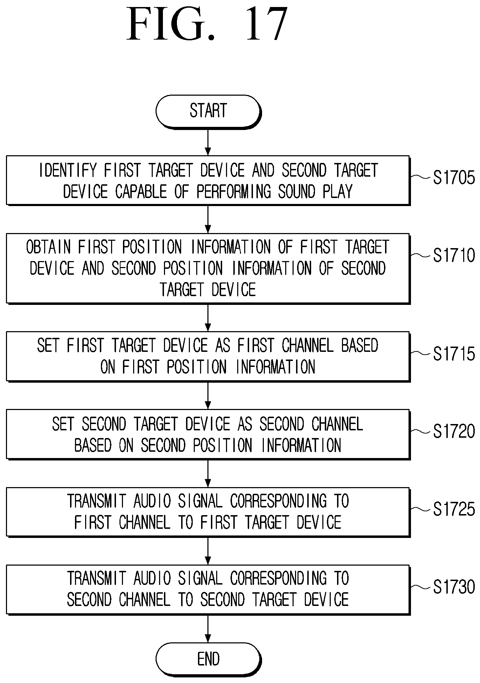

FIG. 17 is a diagram illustrating an operation for forming a channel using the plurality of target devices 200 according to one or more embodiments.

Referring to FIG. 17, the electronic apparatus 100 may identify a first target device and a second target device capable of performing the sound play (S1705).

The electronic apparatus 100 may obtain first position information of the first target device and second position information of the second target device (S1710).

In an example, the electronic apparatus 100 may transmit a communication packet for obtaining position information, and determine the positions of the first target device and the second target device by analyzing a response signal for the communication packet.

In an example, the electronic apparatus 100 may receive position information of a device from each of the first target device and the second target device

The electronic apparatus 100 may provide the sound play through a multi-channel output method.

The electronic apparatus 100 may set a channel taking into consideration the position information of the target devices. For example, for a two channel, a left side (L) channel and a right side (R) channel should be set.

The electronic apparatus 100 may set the first target device as the first channel based on the first position information (S1715). For example, the first channel may be the left side (L) channel.

The electronic apparatus 100 may set the second target device as the second channel based on the second position information (S1720). For example, the second channel may be the right side (R) channel.

The electronic apparatus 100 may transmit an audio signal corresponding to the first channel to the first target device (S1725). The electronic apparatus 100 may transmit an audio signal corresponding to the second channel to the second target device (S1730).

According to various embodiments, the electronic apparatus 100 may perform a channel setting operation based on the first position information of the first target device, the second position information of the second target device, and the position information of the user 10. The electronic apparatus 100 may determine channel output methods of the first target device and the second target device taking into additional consideration the position information of the user 10.

The electronic apparatus 100 may transmit an audio signal corresponding to the first channel to the first target device, and transmit an audio signal corresponding to the second channel to the second target device. The electronic apparatus 100 may perform the sound play in the multi-channel output method.

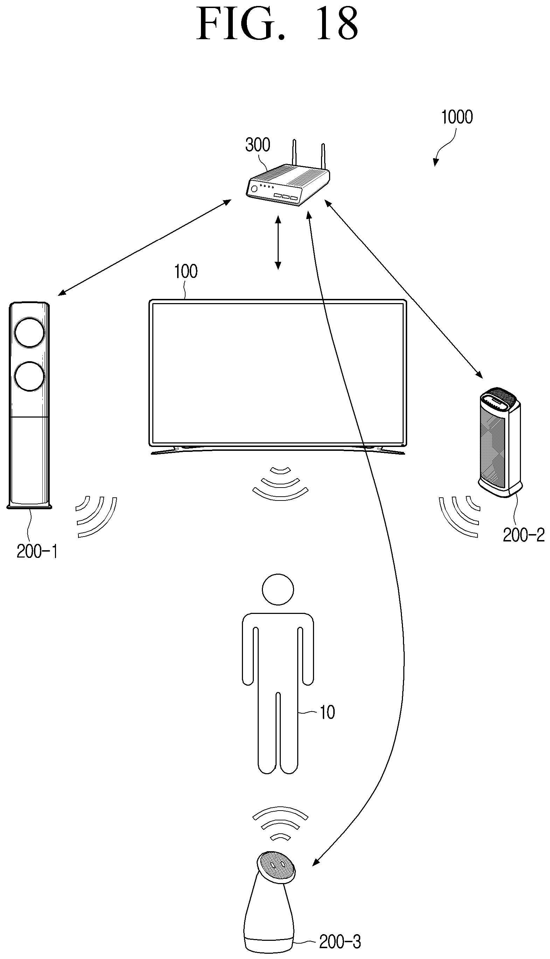

FIG. 18 is a diagram illustrating an operation for using a host apparatus according to one or more embodiments.

Referring to FIG. 18, the plurality of apparatuses 100, 200-1, 200-2, and 200-3 included in the network 1000 (e.g., the apparatus 100 and the devices 200-1, 200-2, and 200-3) may be connected to a host apparatus 300. The host apparatus 300 may communicate with each of the plurality of apparatuses. The plurality of apparatuses may be described as sub(or peripheral) devices.

The host apparatus 300 may transmit the first wakeup signal, the second wakeup signal, the control command, data, and the like to each of the plurality of apparatuses. The host apparatus 300 may receive a communication signal from each of the plurality of apparatuses.

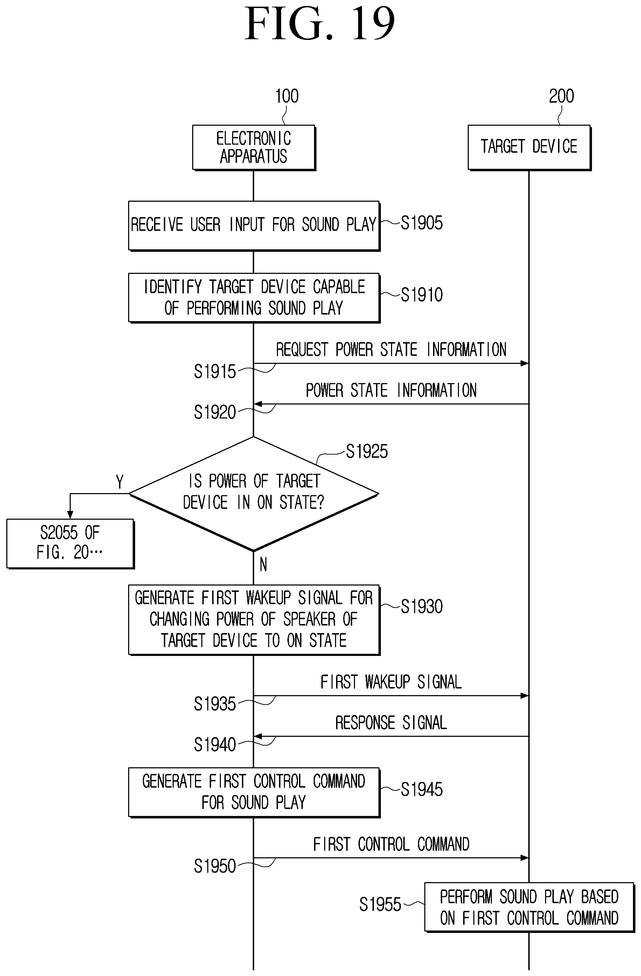

FIG. 19 is a diagram illustrating a relationship of the electronic apparatus 100 and the target device 200 according to one or more embodiments.

Operations S1905 and S1910 in FIG. 19 may correspond to operations S510 and S520 in FIG. 5. Operations S1925, S1930, S1935, and S1950 in FIG. 19 may correspond to operations S710, S715, S720, and S725 in FIG. 7. Redundant descriptions will be omitted.

The electronic apparatus 100 may receive the user input for the sound play (S1905). The electronic apparatus 100 may identify the target device 200 capable of performing the sound play (S1910). The electronic apparatus 100 may request power state information to the target device 200 (S1915).

The target device 200 may receive a signal requesting the power state information from the electronic apparatus 100. The target device 200 may transmit the power state information to the electronic apparatus 100 (S1920).

According to various embodiments, if power of the target device 200 is in an off state, the target device 200 may not transmit the power state information to the electronic apparatus 100.

The electronic apparatus 100 may receive the power state information from the target device 200. The electronic apparatus 100 may not receive the power state information from the target device 200 for a preset time.

The electronic apparatus 100 may determine whether power of the target device 200 is in an on state (S1925).

Based on power of the target device 200 being in an on state (S1925-Y), the electronic apparatus 100 may perform the operations described in FIG. 20. For example, the electronic apparatus 100 and the target device 200 may perform operations S2055 to S2091 in FIG. 20.

Based on power of the target device 200 being in an off state (S1925-N), the electronic apparatus 100 may generate the first wakeup signal for changing power of the speaker 270 included in the target device 200 to an on state (S1930). The electronic apparatus 100 may transmit the first wakeup signal to the target device 200 (S1935).

The target device 200 may receive the first wakeup signal from the electronic apparatus 100. The target device 200 may transmit a response signal for the first wakeup signal to the electronic apparatus 100 (S1940).

The electronic apparatus 100 may receive the response signal corresponding to the first wakeup signal from the target device 200. Based on the response signal being received, the electronic apparatus 100 may generate the first control command for the sound play (S1945). The electronic apparatus 100 may transmit the first control command to the target device 200 (S1950).

The target device 200 may receive the first control command. The target device 200 may perform the sound play based on the first control command (S1955). The target device 200 may output an audio signal corresponding to the sound play through the speaker 270.

FIG. 20 is a diagram illustrating a relationship of the electronic apparatus 100 and the target device 200 according to one or more embodiments.

Operations S2005, S2010, S2015, S2020, and S2025 in FIG. 20 may correspond to operations S1905, S1910, S1915, S1920, and S1925 in FIG. 19. Operations S2055 and S2070 in FIG. 20 may correspond to operations S735 and S740 in FIG. 7. Operations S2075, S2080, S2085, and S2090 in FIG. 20 may correspond to operations S820, S830, S835, and S840 in FIG. 8. Redundant descriptions will be omitted.

Based on power of the target device 200 being in an on state (S2025), the electronic apparatus 100 may transmit an authorization request for the speaker 270 included in the target device 200 to the target device 200 (S2055).

The target device 200 may receive the authorization request from the electronic apparatus 100. The target device 200 may transmit a signal indicating grant of authority to the electronic apparatus 100 as a response to the authorization request (S2060).

The electronic apparatus 100 may receive the signal indicating grant of authority from the target device 200. The signal indicating grant of authority may be described as an authorization approval signal. When the signal indicating grant of authority is received, the electronic apparatus 100 may generate the first control command for the sound play (S2065). The electronic apparatus 100 may transmit the first control command to the target device 200 (S2070).

The target device 200 may receive the first control command. The target device 200 may perform the sound play based on the first control command (S2071). The target device 200 may output the audio signal corresponding to the sound play through the speaker 270.

While performing the sound play according to the first control command from the target device 200, the electronic apparatus 100 may obtain audio data including the audio signal output from the target device 200 (S2075).

The electronic apparatus 100 may obtain the size of the noise audio signal and the size of the target audio signal based on the audio data. Based on the size of the noise audio signal not being greater than or equal to the size of the target audio signal (S2080-N), the electronic apparatus 100 may perform operations S2065, S2070, S2075, and S2080.

Based on the size of the noise audio signal being greater than or equal to the size of the target audio signal (S2080-Y), the electronic apparatus 100 may generate the second control command for controlling the output of the target device (S2085). The electronic apparatus 100 may transmit the second control command to the target device 200 (S2090).

The target device 200 may receive the second control command. The target device 200 may perform the sound play based on the second control command (S2091). The target device 200 may output the audio signal corresponding to the sound play through the speaker 270 after having performed the operation corresponding to the second control command.

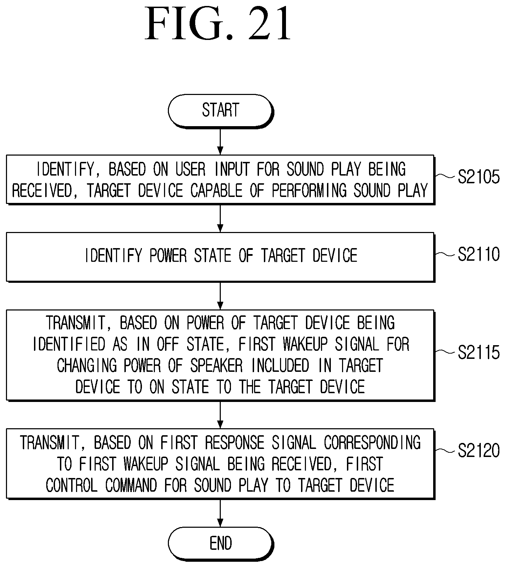

FIG. 21 is a diagram illustrating a controlling method of the electronic apparatus 100 according to one or more embodiments.

Referring to FIG. 21, the controlling method of the electronic apparatus 100 may further include identifying, based on a user input for a sound play being received, the target device 200 capable of performing the sound play (S2105), identifying the power state of the target device 200 (S2110), transmitting, based on power of the target device 200 being identified as in an off state, the first wakeup signal for changing power of the speaker 270 included in the target device 200 to an on state to the target device 200 (S2115), and transmitting, based on the first response signal corresponding to the first wakeup signal being received, the first control command for the sound play to the target device 200 (S2120).

The identifying a power state of the target device 200 (S2110) may include transmitting the signal requesting for power state information of the target device 200 to the target device 200, and determining, based on the power state information of the target device 200 being received, whether power of the target device 200 is in an off state based on the power state information.

The transmitting a first wakeup signal (S2115) may include transmitting, based on the power state information of the target device 200 not being received for a threshold time, the first wakeup signal to the target device 200.

The control method may further include transmitting, based on the first response signal corresponding to the first wakeup signal not being received for the threshold time, the second wakeup signal for changing power of the target device 200 to an on state to the target device 200, and transmitting, based on the second response signal corresponding to the second wakeup signal being received, the first control command for the sound play to the target device 200.

The control method may further include providing, based on the second response signal corresponding to the second wakeup signal not being received for the threshold time, the guide screen associated with the power state of the target device 200.

The transmitting a first wakeup signal (S2115) may include transmitting the first wakeup signal to the target device 200 through the first wakeup pin of the communication interface included in the electronic apparatus 100, and the transmitting a second wakeup signal may include transmitting the second wakeup signal to the target device 200 through the second wakeup pin of the communication interface.

The control method may further include transmitting, based on power of the target device 200 being in an on state, the signal requesting authority for the speaker 270 of the target device 200 to the target device 200, and transmitting, based on the response signal corresponding to the signal requesting authority being received, the first control command for the sound play to the target device 200.

The control method may further include obtaining, while the target device 200 is performing the sound play, audio data through the microphone included in the electronic apparatus 100, distinguishing the target audio signal and the noise audio signal associated with the sound play based on the audio data, and transmitting, based on the first size of the noise audio signal being greater than or equal to the second size of the target audio signal, the second control command for changing the output of the target device 200 to the target device 200.

The transmitting a second control command may include transmitting the second control command for increasing the volume of the speaker 270 included in the target device 200 to the target device 200.

The transmitting a second control command may include the second control command for reducing noise output from the target device 200 to the target device 200.

Methods according to various embodiments of the disclosure described above may be implemented in an application form installable in the electronic apparatus 100 of the related art.

The methods according to the various embodiments of the disclosure described above may be implemented with only a software upgrade, or a hardware upgrade for the electronic apparatus 100 of the related art.

The various embodiments of the disclosure described above may be performed through an embedded server provided in the electronic apparatus 100, or performed through at least one external server from among an embedded server provided in the electronic apparatus 100, or performed through at least one external server from among the electronic apparatus 100 and a display apparatus.

According to one or more embodiments of the disclosure, the various embodiments described above may be implemented with software including instructions stored in a machine-readable storage media (e.g., computer). The machine may call a stored instruction from the storage medium, and as an apparatus operable according to the called instruction, may include an electronic apparatus 100 according to the above-mentioned embodiments. Based on a command being executed by the processor, the processor may directly or using other elements under the control of the processor perform a function corresponding to the command. The command may include a code generated by a compiler or executed by an interpreter. The machine-readable storage medium may be provided in a form of a non-transitory storage medium. Herein, 'non-transitory' merely means that the storage medium is tangible and does not include a signal, and the term does not differentiate data being semi-permanently stored or being temporarily stored in the storage medium.

According to one or more embodiments of the disclosure, a method according to the various embodiments described above may be provided included a computer program product. The computer program product may be exchanged between a seller and a purchaser as a commodity. The computer program product may be distributed in a form of a machine-readable storage medium (e.g., a compact disc read only memory (CD-ROM)), or distributed online through an application store (e.g., PLAYSTORE^{™}). In the case of online distribution, at least a portion of the computer program product may be stored at least temporarily in the storage medium such as a server of a manufacturer, a server of an application store, or a memory of a relay server, or temporarily generated.

Each of the elements (e.g., a module or a program) according to the various embodiments described above may be formed as a single entity or a plurality of entities, and some sub elements from among the above-mentioned sub elements may be omitted, or other sub elements may be further included in the various embodiments. Alternatively or additionally, some elements (e.g., modules or programs) may be integrated into one entity to perform the same or similar functions performed by each of the relevant elements prior to integration. Operations performed by a module, a program, or another element, in accordance with the various embodiments, may be executed sequentially, in a parallel, repetitively, or in a heuristic manner, or at least some operations may be executed in a different order, omitted or a different operation may be added.

While example embodiments of the disclosure have been illustrated and described in the above, it will be understood that the disclosure is not limited to the specific embodiments describe above, and it will be understood by those skilled in the art that various changes in form and details may be made therein without departing from the true spirit and full scope of the disclosure, including the appended claims and their equivalents.

## Claims

1. An electronic apparatus, comprising:
a communication interface; and
at least one processor, wherein the at least one processor is configured to:
based on a user input for a sound play being received, identify a target device capable of performing the sound play;
identify a power state of the target device;
based on the power state of the target device being identified as an off state, transmit a first wakeup signal for changing a power state of a speaker in the target device to an on state, to the target device through the communication interface; and
based on a first response signal corresponding to the first wakeup signal being received, transmit a first control command for the sound play to the target device through the communication interface.

2. The electronic apparatus of claim 1, wherein the at least one processor is configured to:
transmit, through the communication interface, a signal requesting power state information of the target device, to the target device; and
based on the power state information of the target device being received through the communication interface, determine whether power of the target device is in the off state based on the power state information.

3. The electronic apparatus of claim 2, wherein the at least one processor is configured to:
based on the power state information of the target device not being received for a threshold time through the communication interface, transmit the first wakeup signal to the target device through the communication interface.

4. The electronic apparatus of claim 3, wherein the at least one processor is configured to:
based on the first response signal corresponding to the first wakeup signal not being received for the threshold time, transmit a second wakeup signal for changing the power state of the target device to an on state, to the target device through the communication interface; and
based on a second response signal corresponding to the second wakeup signal being received, transmit the first control command for the sound play to the target device through the communication interface.

5. The electronic apparatus of claim 4, wherein the at least one processor is configured to:
based on the second response signal corresponding to the second wakeup signal not being received for the threshold time, provide a guide screen associated with the power state of the target device.

6. The electronic apparatus of claim 4, wherein the at least one processor is configured to:
transmit, through a first wakeup pin of the communication interface, the first wakeup signal to the target device; and
transmit, through a second wakeup pin of the communication interface, the second wakeup signal to the target device.

7. The electronic apparatus of claim 1, wherein the at least one processor is configured to:
based on power of the target device being in an on state, transmit a signal requesting authority for the speaker of the target device to the target device, through the communication interface; and
based on a response signal corresponding to the signal requesting authority being received, transmit the first control command for the sound play to the target device, through the communication interface.

8. The electronic apparatus of claim 7, further comprising:
a microphone,
wherein the at least one processor is configured to:
obtain, through the microphone, audio data while the target device is performing the sound play;
distinguish a target audio signal and a noise audio signal associated with the sound play based on the audio data; and
based on a first size of the noise audio signal being greater than or equal to a second size of the target audio signal, transmit a second control command for changing an output of the target device to the target device, through the communication interface.

9. The electronic apparatus of claim 8, wherein the at least one processor is configured to:
transmit, through the communication interface, the second control command for increasing volume of the speaker in the target device, to the target device.

10. The electronic apparatus of claim 8, wherein the at least one processor is configured to:
transmit, through the communication interface, the second control command for reducing noise output from the target device, to the target device.

11. A method of controlling an electronic apparatus, the method comprising:
based on a user input for a sound play being received, identifying a target device capable of performing the sound play;
identifying a power state of the target device;
based on power of the target device being identified as in an off state, transmitting a first wakeup signal for changing power of a speaker in the target device to an on state, to the target device; and
based on a first response signal corresponding to the first wakeup signal being received, transmitting a first control command for the sound play, to the target device.

12. The method of claim 11, wherein the identifying the power state of the target device comprises:
transmitting a signal requesting for power state information of the target device, to the target device; and
based on the power state information of the target device being received, determining whether the power state of the target device is the off state based on the power state information.

13. The method of claim 12, wherein the transmitting the first wakeup signal comprises:
based on the power state information of the target device not being received for a threshold time, transmitting the first wakeup signal to the target device.

14. The method of claim 13, further comprising:
based on the first response signal corresponding to the first wakeup signal not being received for the threshold time, transmitting a second wakeup signal for changing the power state of the target device to an on state, to the target device; and
based on a second response signal corresponding to the second wakeup signal being received, transmitting the first control command for the sound play to the target device.

15. The method of claim 14, further comprising:
based on the second response signal corresponding to the second wakeup signal not being received for the threshold time, providing a guide screen associated with the power state of the target device.
